Europäisches Patentamt

European Patent Office

Office européen des brevets

(19)

(11) Veröffentlichungsnummer: **0 204 996**
**B1**

(12) **EUROPÄISCHE PATENTSCHRIFT**

(45) Veröffentlichungstag der Patentschrift:
02.05.90

(51) Int. Cl.⁴: **B60J 5/04**

(21) Anmeldenummer: 86106739.5

(22) Anmeldetag: 16.05.86

(54) **Fahrzeugtür.**

(30) Priorität: 12.06.85 DE 3520975

(43) Veröffentlichungstag der Anmeldung:
17.12.86 Patentblatt 86/51

(45) Bekanntmachung des Hinweises auf die Patenterteilung:
02.05.90 Patentblatt 90/18

(84) Benannte Vertragsstaaten:
AT BE CH DE FR GB IT LI LU NL SE

(56) Entgegenhaltungen:
EP-A- 0 204 997
DE-A- 1 480 089
DE-A- 3 221 322
FR-A- 1 059 621
GB-A- 2 101 535

(73) Patentinhaber: Hüls Troisdorf Aktiengesellschaft,
Postfach 11 65, D-5210 Troisdorf(DE)

(72) Erfinder: Hellriegel, Edmund, Akazienweg 1,
D-5024 Pulheim 1(DE)

## Beschreibung

Die Erfindung betrifft eine Fahrzeugtür mit einer Außenhaut, einer Innenhaut und einem tragenden und versteifenden Skelett, wie sie im Oberbegriff des Anspruches 1 definiert ist (siehe DE-A 3 221 322 oder US-A 4 512 240).

Die üblichen Kraftfahrzeugtüren haben eine aus Metall bestehende Außenhaut, die zugleich eine tragende und stabilisierende Funktion hat und im Türinneren mit Aussteifungen versehen sein kann. Die Innenhaut, die aus Kunststoff bestehen kann, bildet lediglich eine Verkleidung, die an der Außenhaut befestigt ist, jedoch zur Stabilität der Tür wenig oder überhaupt nicht beiträgt. Solche Fahrzeugtüren sind schwergewichtig und teuer.

In der Vergangenheit sind auch bereits Kunststofftüren entwickelt worden. Diese Kunststofftüren konnten jedoch die gewünschten Funktionsanforderungen und die gesetzlichen Bestimmungen nicht erfüllen. Sie sind nicht dimensionsstabil, schrumpfen und genügen nicht den an eine Großserienfertigung zu stellenden Anforderungen.

Aus der gattungsgemäßen DE-A1 32 21 322 (= US-A 4 512 240) ist bereits eine Fahrzeugtür bekannt, die eine Innenhaut und eine Außenhaut aus Kunststoff sowie ein versteifendes Metall-Verstärkungselement (Skelett) aufweist. Wesentlicher Nachteil der bekannten gattungsgemäßen Fahrzeugtür gemäß der DE-A1 32 21 322 ist, daß die Innenhaut und die Außenhaut der Fahrzeugtür zwar durch das Metall-Verstärkungselement (18) versteift, nicht jedoch in seiner Form stabilisiert ist. Bei Temperaturänderungen sind Kunststoffe in besonderem Maße einer Schrumpfung unterzogen, so daß bei einer Fahrzeugtür gemäß der DE-A1 32 21 322 ein dichtes Schließen der Fahrzeugtür nicht gewährleistet ist. Darüber hinaus ist das Verstärkungselement ggf. durch Korrosion gefährdet.

Aufgabe der Erfindung ist es, eine Fahrzeugtür der eingangs genannten Art zu schaffen, die diese Nachteile vermeidet.

Die Lösung dieser Aufgabe besteht erfindungsgemäß darin, daß das tragende und stabilisierende Skelett einen der Türkontur entsprechenden, geschlossenen Rahmen bildet, der in das Kunststoffmaterial der Innenhaut eingebettet und von diesem umhüllt ist.

Bei der erfindungsgemäßen Fahrzeugtür bildet nicht – wie bei den üblichen Türen – die Außenhaut das tragende Teil, sondern die Innenhaut. In die Innenhaut ist das tragende Skelett integriert, das aus starren und formstabilen Streben besteht, die mit dem Kunststoff der Innenhaut umspritzt sind. An der Innenhaut ist die Außenhaut in Form einer separat hergestellten Schale befestigt. Die Außenhaut hat keine tragende Funktion, so daß im Falle einer Beschädigung der Außenhaut die Struktur der Tür nicht leidet. Die Flächen von Innen- und Außenhaut sind elastisch, so daß sie im Falle eines nicht allzu starken Schlages oder Stoßes ihre ursprüngliche Form wieder einnehmen. Da die Fahrzeugtür nahezu ausschließlich aus Kunststoff besteht, hat sie neben dem Vorteil eines geringen Gewichtes den zusätzlichen Vorteil, daß sie keiner Veränderung durch Rost oder Korrosion unterliegt. Die Streben des Skeletts, die aus Metall bestehen können, sind vollständig in das Material der Innenhaut eingebettet und von diesem Material umschlossen, so daß sie ebenfalls wirksam gegen Umwelteinflüsse geschützt sind.

Gemäß einer bevorzugten Ausgestaltung der Erfindung sind an einem Ende des Skeletts Scharnierteile und an dem entgegengesetzten Ende ein Schloß angebracht. Das starre und formstabile Skelett sorgt hierbei für die Beibehaltung der richtigen räumlichen Zuordnung zwischen dem Schloß und den Scharnierteilen. Damit ist sichergestellt, daß bei Formänderungen, die an den Kunststoffteilen auftreten, die Tür stets in der richtigen Weise schließt und daß die Funktion des Schlosses durch derartige Formänderungen nicht beeinträchtigt wird.

Vorzugsweise endet die Außenhaut an der unteren Begrenzungslinie eines Fensters und das mit der Innenhaut einstückige Skelett ist vollständig um das Fenster umlaufend ausgebildet. Das Skelett bildet nicht nur den tragenden und stabilisierenden Teil der Fahrzeugtür, sondern gleichzeitig einen in die Innenhaut eingebetteten Rahmen, der gewährleistet, daß die Tür ihre Form beibehält. Die Außenhaut ist nicht unmittelbar an dem Skelett befestigt, sondern an den das Skelett umgebenden Teilen der Innenhaut. Es ist daher nicht erforderlich, Kunststoff an Metall zu befestigen, wozu spezielle Befestigungsorgane, wie Schrauben, Klipse o.dgl. erforderlich wären. Vielmehr kann die Außenhaut an die Innenhaut angeklebt werden.

Gemäß einer vorteilhaften Ausgestaltung der Erfindung ist vorgesehen, daß das Skelett mindestens eine sich über die gesamte Länge der Tür erstreckende im wesentlichen horizontale Strebe aufweist und daß die Innenhaut oberhalb und/oder unterhalb der Strebe zur Bildung einer Armlehne, Türtasche o.dgl. zurückspringt bzw. zur Bildung von Montagelöchern Öffnungen aufweist. Auf diese Weise ist es möglich, den Innenraum der Tür optimal zu nutzen und das Leervolumen stark zu reduzieren. Der Innenraum des Fahrzeugs wird - bezogen auf die äußeren Abmessungen des Fahrzeugs - in erheblichem Maße vergrößert.

Vorzugsweise sind an den die Streben des Skeletts umschließenden Wülsten der Innenhaut Befestigungsflächen zur Anlage der Außenhaut vorgesehen. Die Außenhaut, die eine Vorsatzschale bildet, kann dadurch auf einfache Weise mit der Innenhaut und somit mit dem Skelett verbunden werden.

Zur Abdichtung des Türspaltes kann die Innenhaut und/oder die Außenhaut entlang des Türumfangs angeformte Dichtlippen aufweisen, und es ist daher nicht erforderlich, separate Dichtlippen aus Fremdwerkstoffen vorzusehen; die Abdichtung erfolgt vielmehr mit dem an den Dichtlippen entsprechend dünn ausgebildeten Material der Innenhaut.

Im folgenden wird unter Bezugnahme auf die Zeichnungen ein Ausführungsbeispiel der Erfindung näher erläutert.

Es zeigen:

Fig. 1 eine Außenansicht der Fahrzeugtür, Fig. 2 eine Innenansicht der Fahrzeugtür,
Fig. 3 eine Stirnansicht aus Richtung des Pfeiles III-III in Fig. 2,
Fig. 4 eine Stirnansicht aus Richtung des Pfeiles IV-IV in Fig. 2,
Fig. 5 einen Schnitt entlang der Linie V-V von Fig. 2,
Fig. 6 einen Schnitt entlang der Linie VI-VI von Fig. 2,
Fig. 7 in vergrößertem Maßstab die Einzelheit VII in Fig. 6,
Fig. 8 einen Schnitt entlang der Linie VIII-VIII von Fig. 2,
Fig. 9 einen Schnitt entlang der Linie IX-IX von Fig. 2,
Fig. 10 einen Schnitt entlang der Linie X-X von Fig. 2,
Fig. 11 eine Ansicht des Skeletts der Fahrzeugtür,
Fig. 12 eine Stirnansicht des Skeletts aus Richtung des Pfeiles XII von Fig. 11,
Fig. 13 eine Stirnansicht des Skeletts aus Richtung des Pfeiles XIII von Fig. 11,
Fig. 14 einen Schnitt entlang der Linie XIV-XIV von Fig. 11, jedoch mit zusätzlicher Darstellung der Außenhaut,
Fig. 15 einen Schnitt entlang der Linie XV-XV von Fig. 11 mit zusätzlicher Darstellung der Außenhaut,
Fig. 16 eine Ansicht der Außenhaut und
Fig. 17 eine Darstellung des Profils der Außenhaut.

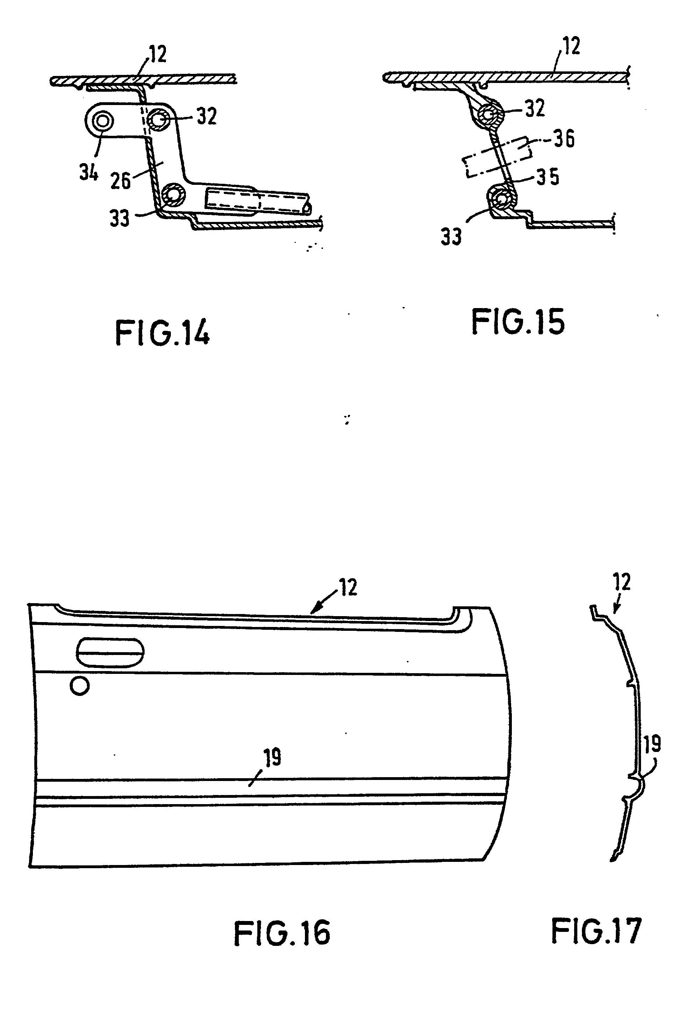

Die dargestellte Fahrzeugtür ist zur Anbringung an Personenwagen bestimmt. Sie weist einen tragenden Türkörper 10 auf, an dem unterhalb des Fensters 11 die Außenhaut 12 befestigt ist. Die das Fenster 11 nach oben und seitlich begrenzenden Holme 13 sind Bestandteil des Türkörpers 10. Das Fenster 11 besteht aus einer fest mit dem Türkörper 10 verbundenen Scheibe 14, die den größten Teil der Fensteröffnung ausfüllt, und einem versenkbaren Fensterteil 15, der in das Innere der Tür herabgelassen werden kann, um eine Fensteröffnung freizugeben. Die spitz zulaufende vordere Ecke des Fensters 11 wird von einer Montageplatte 16 gebildet, an der ein Rückspiegel angebracht werden kann. Auch diese Montageplatte ist fest mit dem Türkörper 10 verbunden. An der als Vorsatzschale ausgebildeten Außenhaut 12 sind in bekannter Weise ein Türgriff 17 und das Schlüsselloch 18 eines Schlosses angebracht. Die Außenhaut 12 endet ungefähr an der Unterkante des Fensters 11 und sie weist im unteren Bereich eine längslaufende Rammschutzleiste 19 in Form eines Hohlwulstes auf. Wie die Fign. 16 und 17 zeigen, besteht die Außenhaut 12 aus einer separat gefertigten Schale, die aus Kunststoff hergestellt und nachträglich an dem Türkörper 10 befestigt ist.

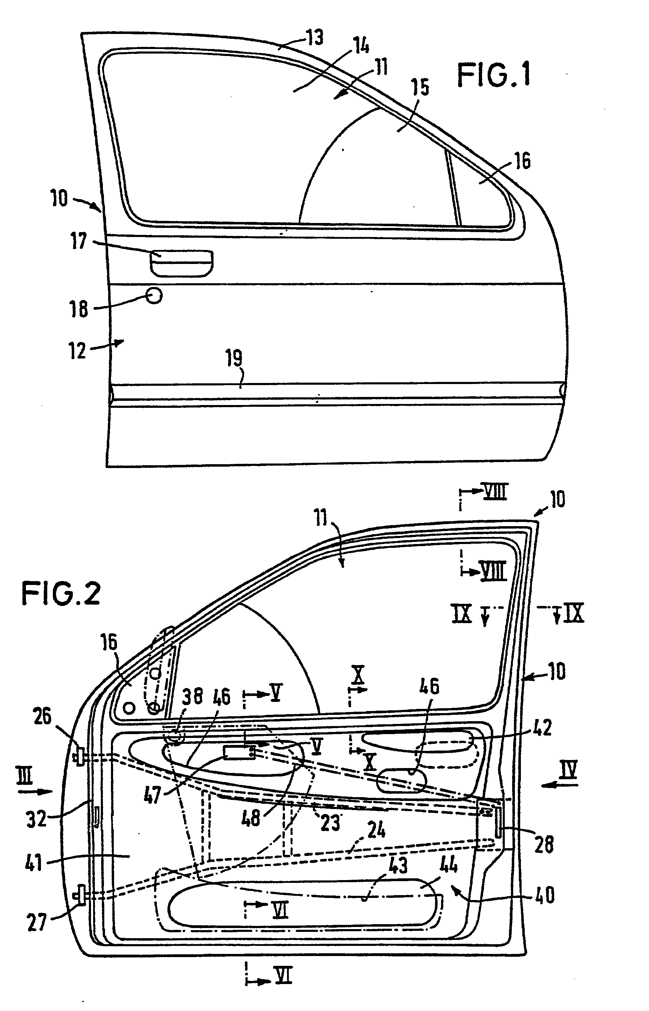

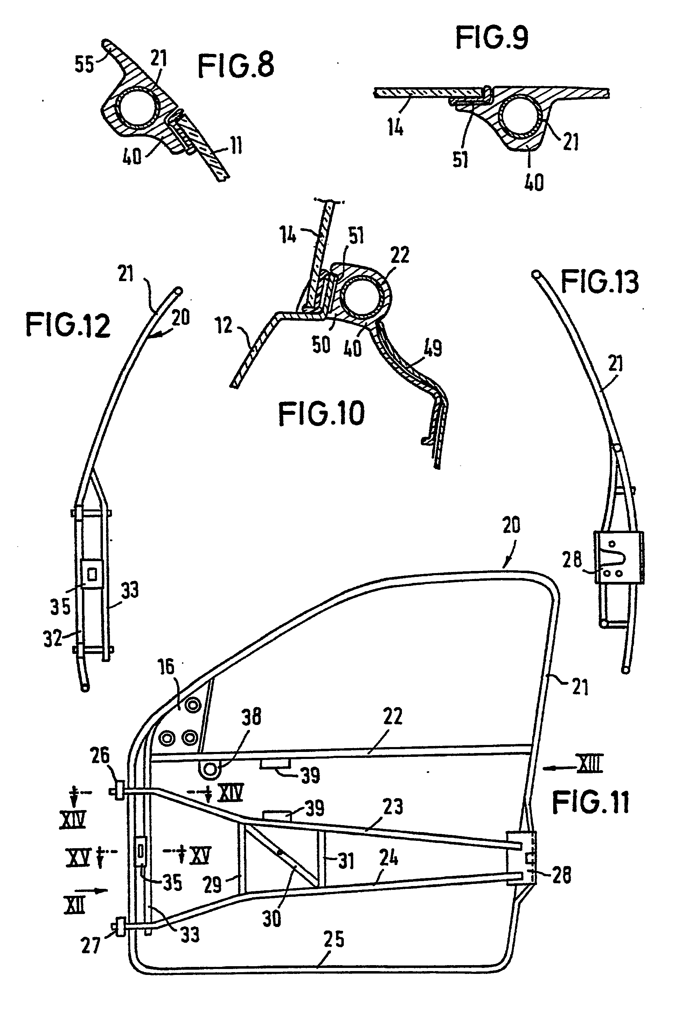

Der in Fig. 2 von der Fahrzeuginnenseite her sichtbare Türkörper 10 enthält das in Fig. 11 dargestellte Skelett 20, das aus starren Streben, vorzugsweise aus Metall, besteht. Der Querschnitt dieser Streben ist beispielsweise rohrförmig. Das Skelett 20 besteht aus einem Rahmen 21, dessen Kontur derjenigen der Fahrzeugtür entspricht. In dem geschlossenen Rahmen 21 verläuft unterhalb der Öffnung für das Fenster eine Längsstrebe 22, die sich über die gesamte Länge des Rahmens erstreckt und deren Enden mit den vertikalen Streben des Rahmens 21 verbunden sind. Zwei weitere Längsstreben 23, 24 verlaufen im wesentlichen horizontal in dem Bereich zwischen der Längsstrebe 22 und der unteren Rahmenstrebe 25. Jede dieser Längsstreben 23 und 24 erstreckt sich von einem Scharnierteil 26 bzw. 27 an dem einen Ende des Rahmens 21 bis zu dem Schloß 28 am anderen Ende des Rahmens. Die Längsstreben 23 und 24 sind durch Querstreben 29, 30, 31 miteinander verbunden, um innerhalb des Rahmens 21 einen starren Träger zu bilden, der sich von den Scharnierteilen 26, 27 bis zum Schloß 28 erstreckt. Die Scharnierteile 26, 27 sind an zwei parallelen vertikalen Streben 32, 33 befestigt, die das vordere Ende des Rahmens 21 bilden. Die Strebe 32 befindet sich in der Hauptebene des Rahmens 21, während die Strebe 33 zum Fahrzeuginneren hin ausgestellt ist. An den Streben 32 und 33 sind die Scharnierteile 26 und 27, die jeweils einen nach vorne abstehenden Scharnierarm 34 aufweisen (Fig. 14), befestigt. In der Mitte zwischen den Scharnierteilen 26 und 27 erstreckt sich zwischen den Streben 32 und 33 eine Lagersteg 35 mit einer Durchgangsöffnung für eine Haltezunge 36, die in das Innere der Fahrzeugtür hineinragt und die Öffnungsstellung der Tür begrenzt.

An dem Rahmen 21 sind ferner ein Lager 38 für das Schwenkfenster 15 und Halterungen 39 für eine (nicht dargestellte) Fensterbetätigungsvorrichtung befestigt.

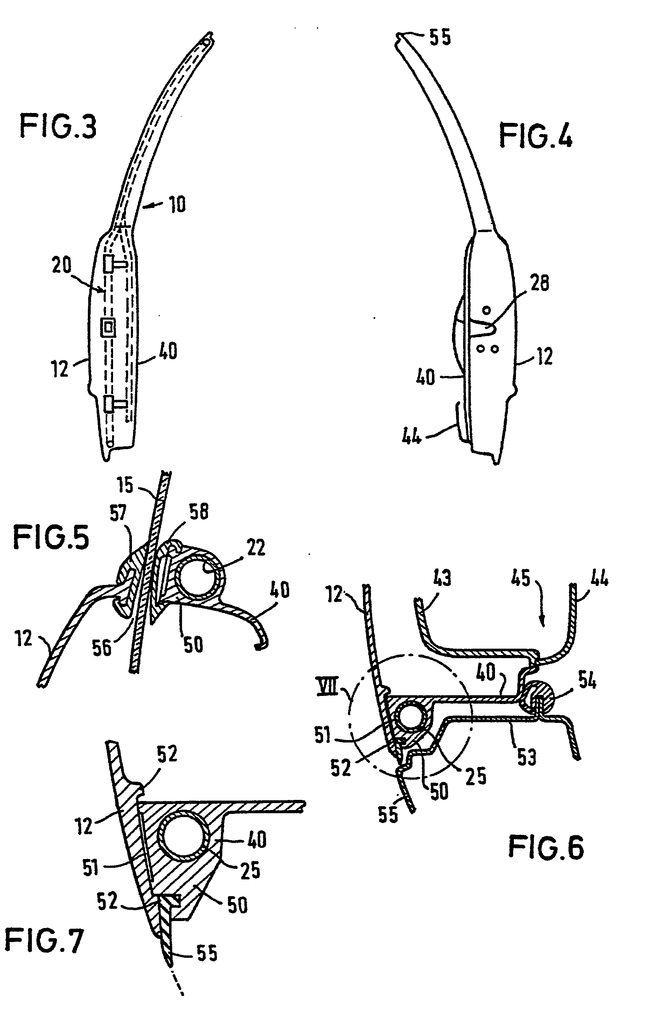

Das Skelett 20 ist - mit Ausnahme der Teile 16, 26, 27 und 28 - von dem Kunststoff der Innenhaut 40 vollständig umspritzt und in diesen eingebettet. Dies geht insbesondere aus den Fign. 5 bis 10 hervor. Man erkennt, daß sämtliche Streben des Skelettes von dem Kunststoff der Innenhaut 40 vollständig umschlossen sind. Die Innenhaut 40 weist ferner eine Schale 41 auf, die sich im wesentlichen über die gesamte Fläche unterhalb der Unterkante des Fensters 14 erstreckt (Fig. 2). In dieser Schale 41 sind eine Stützmulde 42 zum Einsetzen eines Ellenbogens und im unteren Türbereich eine Ablagemulde 43 (Fign. 2 und 6) eingeformt. Die Mulden 42 und 43, die oberhalb und unterhalb des von den Längsstreben 23 und 24 gebildeten Balkens angeordnet sind, springen von der Innenseite des Fahrzeugs nach außen vor, d.h. die Mulden 42 und 43 sind in Richtung auf die Außenhaut 12 ausgebeult und sie überlagern sich (in Draufsicht betrachtet) mit den Längsstreben 23,24. Vor die Ablagemulde 43 (Fig. 6) ist eine im Fahrzeuginneren vorstehende Seitenwange 44 gesetzt, um die in der Ablagemulde 43 gebildete Ablagetasche zu begrenzen. In der Innenhaut 40 sind außerdem Montagelöcher 46 vorgesehen. Hinter einem dieser Montagelöcher 46 befindet sich der an dem Skelett befestigte Betätigungsmechanismus 47 für das Türschloß 28. Von dem Betätigungsmechanismus 47 führt durch das Innere der Fahrzeugtür hindurch ein Gestänge 48 zum Türschloß.

Die Innenhaut 40 ist teilweise mit einer Türverkleidung 49 (Fig. 10) bedeckt, welche die Montage-öffnungen 46 verdeckt.

Die Befestigung der Außenhaut 12 an der Innenhaut 40 geht insbesondere aus den Fign. 6 und 7 hervor. Die als Hohlprofil ausgebildeten Streben des Skeletts 20 sind von Wülsten 50 der Innenhaut 40 umschlossen und diese Wülste 50 haben eine nach außen gerichtete Anlagefläche 51, an der die Außenhaut 12 flächenhaft zur Anlage kommt. In jeder Anlagefläche 51 ist eine flache Vertiefung zur Aufnahme von Klebemittel vorgesehen. Zu beiden Seiten der Anlagefläche 51 weist die Außenhaut 12 Stege 52 auf, die dazu dienen, die Außenhaut 12 in bezug auf die Innenhaut 40 zu positionieren und das Herausquellen von Klebemittel zu vermeiden.

Gemäß Fig. 6 ist an der Trittstufe 53 des Fahrzeugs eine Dichtleiste 54 befestigt, an der ein Stufenabsatz der Innenhaut bei geschlossener Tür zur Anlage kommt. Ähnliche Dichtleisten 54 sind an den übrigen Kanten des Türrahmens vorgesehen. Die Außenhaut 12 und/oder die Innenhaut 40 weisen außerdem angeformte oder separat angesetzte Dichtlippen 55 auf, die sich an die fahrzeugseitige Begrenzung der Türöffnung anlegen.

Wie Fig. 5 zeigt, ist das Schwenkfenster 15, das um das Lager 38 herum schwenkbar ist, durch den Fensterspalt 56 hindurch in das Innere der Fahrzeugtür hinein absenkbar. Der Betätigungsmechanismus für das Schwenkfenster 15 ist aus Gründen der Übersichtlichkeit nicht dargestellt. Der Fensterspalt 56 wird zu beiden Seiten des Schwenkfensters 15 von Dichtleisten 57, 58 begrenzt, von denen die Dichtleiste 57 an der Oberkante der Außenhaut 12 befestigt ist, während die gegenüberliegende Dichtleiste 58 an dem Wulst 50 der Längsstrebe 22 angebracht ist.

Fig. 10 zeigt die Befestigung der feststehenden Scheibe 14, deren unterer Rand bei dem vorliegenden Ausführungsbeispiel an der Außenseite des oberen Endes der Außenhaut 12 angeklebt ist. Das obere Ende der Außenhaut 12 ist seinerseits an der Befestigungsfläche 51 des Wulstes 50 der Längsstrebe 22 angeklebt. An der rückwärtigen vertikalen Strebe 21 ist die Scheibe 14 gemäß Fig. 9 unter Zwischenlage einer Dichtung ebenfalls an einer Befestigungsfläche 51 angeklebt.

Die Außenhaut 12 muß mit der Innenhaut 40 nicht notwendigerweise verklebt sein. Auch Verbindungen mit Schrauben, Klipsen sowie durch Noppenschweißung sind möglich.

**Patentansprüche**

1. Fahrzeugtür mit einer Außenhaut (12), einer Innenhaut (40) und einem tragenden und stabilisierenden Skelett (20), wobei die Außenhaut (12) und die Innenhaut (40) weitgehend aus Kunststoff bestehen, dadurch gekennzeichnet, daß das tragende und stabilisierende Skelett (20) einen der Türkontur entsprechenden, geschlossenen Rahmen (21) bildet, der in das Kunststoffmaterial der Innenhaut (40) eingebettet und von diesem umhüllt ist.

2. Fahrzeugtür nach Anspruch 1, dadurch gekennzeichnet, daß an einem Ende des Skeletts (20) Scharnierteile (26,27) und an dem entgegengesetzten Ende ein Schloß (28) angebracht sind.

3. Fahrzeugtür nach Anspruch 1 oder 2, dadurch gekennzeichnet, daß die Außenhaut (12) an der unteren Begrenzungslinie eines Fensters (11) endet und daß das mit der Innenhaut (40) einstückige Skelett (20) vollständig um das Fenster (14) umlaufend ausgebildet ist.

4. Fahrzeugtür nach einem der Ansprüche 1 bis 3, dadurch gekennzeichnet, daß das Skelett (20) mindestens eine sich über die gesamte Länge der Tür erstreckende im wesentlichen horizontale Strebe (23;24) aufweist und daß die Innenhaut (40) oberhalb und/oder unterhalb dieser Strebe zur Bildung einer Armlehne (42) Türtasche (43,44) o.dgl. zurückspringt bzw. zur Bildung von Montagelöchern (46) Öffnungen aufweist.

5. Fahrzeugtür nach einem der Ansprüche 1 bis 4, dadurch gekennzeichnet, daß an den die Streben des Skeletts (20) umschließenden Wülsten (50) der Innenhaut (40) Befestigungsflächen (51) zur Anlage der Außenhaut (12) vorgesehen sind.

6. Fahrzeugtür nach einem der Ansprüche 1 bis 5, dadurch gekennzeichnet, daß das Skelett (20) Streben aufweist, die entlang des gesamten Türumfangs verlaufen.

7. Fahrzeugtür nach einem der Ansprüche 1 bis 6, dadurch gekennzeichnet, daß die Innenhaut (40) und/oder die Außenhaut (12) entlang des Türumfangs angeformte Dichtlippen (55) aufweist.

8. Fahrzeugtür nach einem der Ansprüche 1 bis 7, dadurch gekennzeichnet, daß mindestens ein Teil des Fensters (11) aus einer fest mit der Innenhaut (40) verbundenen Scheibe (14) besteht.

9. Fahrzeugtür nach einem der Ansprüche 1 bis 8, dadurch gekennzeichnet, daß die Außenhaut (12) eine einstückig angeformte, nach außen vorstehende Rammschutzleiste (19) aufweist.

10. Fahrzeugtür nach einem der Ansprüche 1 bis 9, dadurch gekennzeichnet, daß das Skelett (20) aus Metall besteht.

11. Fahrzeugtür nach einem der Ansprüche 1 bis 10, dadurch gekennzeichnet, daß das Skelett (20) einen entlang des Türrandes umlaufenden Rahmen (21) und zwei mittlere Längsstreben (23,24) aufweist, die sich von jeweils einem Scharnierteil (26;27) bis zu einem Schloß (28) erstrecken und durch Verstärkungsstreben (29,30,31) miteinander verbunden sind, und daß eine weitere Längsstrebe (22) die untere Begrenzung eines Fensters (11) bildet.

**Claims**

1. Vehicle door with an outer skin (12), an inner skin (40) and a supporting and stabilising skeleton (20), wherein the outer skin (12) and the inner skin (40) consist predominantly of plastics, characterised in that the supporting and stabilising skeleton (20) forms a closed frame (21) corresponding to the contour of the door, which frame (21) is embedded in the plastics material of the inner skin (40) and is encased by this.

2. Vehicle door according to claim 1, characterised in that hinge parts (26, 27) are attached to one end of the skeleton (20) and a lock (28) is attached to the oppositely located end.

3. Vehicle door according to claim 1 or 2, characterised in that the outer skin (12) ends at the lower boundary line of a window (11) and that the skeleton (20) is formed in one piece with the inner skin (40) running completely around the window (14).

4. Vehicle door according to one of claims 1 to 3, characterised in that the skeleton (20) possesses at least one essentially horizontal strut (23; 24) extending over the entire length of the door and that the inner skin (40) re-enters above and/or below this strut for formation of an arm rest (42), door pocket (43, 44) or the like or possesses openings for formation of mounting holes (46).

5. Vehicle door according to one of claims 1 to 4, characterised in that fastening surfaces (51) are provided at the beadings (50) of the inner skin (40) surrounding the struts of the skeleton (20) for installing the outer skin (12).

6. Vehicle door according to one of claims 1 to 5, characterised in that the skeleton (20) possesses struts which run along the entire door periphery.

7. Vehicle door according to one of claims 1 to 6, characterised in that the inner skin (40) and/or the outer skin (12) possesses sealing lips (55) formed along the door periphery.

8. Vehicle door according to one of claims 1 to 7, characterised in that at least one part of the window (11) consists of a pane (14) connected fast with the inner skin (40).

9. Vehicle door according to one of claims 1 to 8, characterised in that the outer skin (12) possesses an impact protecting strip (19) projecting outwardly, which is formed in one piece.

10. Vehicle door according to one of claims 1 to 9, characterised in that the skeleton (20) consists of metal.

11. Vehicle door according to one of claims 1 to 10, characterised in that the skeleton (20) possesses a frame (21) running around the length of the door edge and two intermediate lengthwise struts (23, 24) which extend each from a hinge part (26; 27) up to a lock (28) and are connected with one another by reinforcing struts (29, 30, 31), and that a further lengthwise strut (22) forms the lower boundary of a window (11).

**Revendications**

1. Portière de véhicule comportant une enveloppe externe (12), une enveloppe interne (40) et un squelette (20) porteur et stabilisateur, ladite enveloppe externe (12) et ladite enveloppe interne (40) étant constituées essentiellement en matière plastique, caractérisée par le fait que ledit squelette (20) forme un cadre fermé (21) correspondant au contour de la portière, qui est noyé dans la matière plastique constituant l'enveloppe interne (40) et enrobé par cette matière.

2. Portière de véhicule selon la revendication 1, caractérisée par le fait que sur une extrémité du squelette (20) sont fixés des éléments de charnière (26, 27) et sur l'extrémité opposée une serrure (28).

3. Portière de véhicule selon la revendication 1 ou 2, caractérisée par le fait que l'enveloppe externe (12) se termine sur la ligne de délimitation inférieure d'une fenêtre (11) et que le squelette (20) formant une seule pièce avec l'enveloppe interne (40) est réalisé de manière à entourer intégralement la fenêtre (11).

4. Portière de véhicule selon l'une des revendications 1 à 3, caractérisée par le fait que le squelette (20) présente au moins un longeron (23, 34) sensiblement horizontal et s'étendant sur toute la longueur de la portière et par le fait que l'enveloppe interne (40) fait, au-dessus et/ou au-dessous de ce longeron, un retrait pour la réalisation d'un appui-bras (42), d'une poche de portière (43, 44) ou de dispositifs analogues, ou présente des ouvertures permettant la réalisation de trous de montage (46).

5. Portière de véhicule selon l'une des revendications 1 à 4, caractérisée par le fait que, sur les bourrelets (50) de l'enveloppe interne (40) qui entourent les longerons du squelette (20), sont prévues des surfaces de fixation (51) permettant l'application de l'enveloppe externe (12).

6. Portière de véhicule selon l'une des revendications 1 à 5, caractérisée par le fait que le squelette (20) présente des longerons qui s'étendent le long de tout le pourtour de la portière.

7. Portière de véhicule selon l'une des revendications 1 à 6, caractérisée par le fait que l'enveloppe interne (40) et/ou l'enveloppe externe (12) présentent des lèvres d'étanchéité (55) formées sur elles le long du pourtour de la porte.

8. Portière de véhicule selon l'une des revendications 1 à 7, caractérisée par le fait qu'au moins une partie de la fenêtre (11) est constituée d'une vitre (14) reliée de manière permanente à l'enveloppe interne (40).

9. Portière de véhicule selon l'une des revendications 1 à 8, caractérisée par le fait que l'enveloppe externe (12) présente une baguette pare-chocs (19) formée sur elle d'une seule pièce et faisant saillie vers l'extérieur.

10. Portière de véhicule selon l'une des revendications 1 à 9, caractérisée par le fait que le squelette (20) est en métal.

11. Portière de véhicule selon l'une des revendications 1 à 10, caractérisée par le fait que le squelette (20) présente un cadre (21) entourant la portière le long de son bord et deux longerons longitudinaux médians (23, 24) qui s'étendent à chaque fois à partir d'un élément de charnière (26, 27) jusqu'à une serrure (28) et qui sont reliés entre eux par des traverses de renfort (29, 30, 31), et par le fait qu'un autre longeron longitudinal (22) constitue la limite inférieure d'une fenêtre (11).

FIG.1

FIG.2

FIG.3

FIG.4

FIG.5

FIG.6

FIG.7

FIG.8

FIG.9

FIG.12

FIG.13

FIG.10

FIG.11

FIG.14

FIG.15

FIG.16

FIG.17